# EUROPEAN PATENT APPLICATION

(11) **EP 1 414 216 A2**
(43) Date of publication of application: **28.04.2004**
(21) Application number: 03023912.3
(22) Date of filing: 21.10.2003
(51) Int. Cl.: H04L 29/06

(54) **System and methodology providing automation security architecture in an industrial controller environment**

(30) Priority: 21.10.2002 US 420006 P; 12.09.2003 US 661239 P
(71) Applicant: Rockwell Automation Technologies, Inc., Milwaukee, Wisconsin 53204 (US)
(72) Inventor: Brandt, David D., Milwaukee, Wisconsin 53219 (US); Hall, Kenwood, Hudson, Ohio 44236 (US); Carnahan, Danny L., Hudson, Ohio 44236 (US)
(74) Representative: Grünecker, Kinkeldey, Stockmair & Schwanhäusser Anwaltssozietät

(57) **Abstract**

The present invention relates to a system and methodology facilitating automation security in a networked-based industrial controller environment. Various components, systems and methodologies are provided to facilitate varying levels of automation security depending on one or more security models, system capabilities, and/or other factors such as risk and cost-based assessments, for example. The security models can include asset and access based models having respective security attributes that describe the type of automation component to be accessed and the type of access permitted within the automation component such as a read and/or write access. Other type attributes include time and location information that further control outside network access to automation components.

## Description

### REFERENCE TO RELATED APPLICATION(S)

This application claims the benefit of U.S. Provisional Patent Application Serial No. 60/420,006 which was filed October 21, 2002, entitled System and Methodology Providing Automation Security in an Industrial Controller Environment, the entirety of which is incorporated herein by reference.

### TECHNICAL FIELD

The present invention relates generally to industrial control systems, and more particularly to a system and methodology to facilitate electronic and network security in an industrial automation system.

### BACKGROUND OF THE INVENTION

Industrial controllers are special-purpose computers utilized for controlling industrial processes, manufacturing equipment, and other factory automation, such as data collection or networked systems. In accordance with a control program, the industrial controller, having an associated processor (or processors), measures one or more process variables or inputs reflecting the status of a controlled system, and changes outputs effecting control of such system. The inputs and outputs may be binary, (*e*.*g*., on or off), as well as analog inputs and outputs assuming a continuous range of values.

Measured inputs received from such systems and the outputs transmitted by the systems generally pass through one or more input/output (I/O) modules. These I/O modules serve as an electrical interface to the controller and may be located proximate or remote from the controller including remote network interfaces to associated systems. Inputs and outputs may be recorded in an I/O table in processor memory, wherein input values may be asynchronously read from one or more input modules and output values written to the I/O table for subsequent communication to the control system by specialized communications circuitry (*e*.*g*., back plane interface, communications module). Output modules may interface directly with one or more control elements, by receiving an output from the I/O table to control a device such as a motor, valve, solenoid, amplifier, and the like.

At the core of the industrial control system, is a logic processor such as a Programmable Logic Controller (PLC) or PC-based controller. Programmable Logic Controllers for instance, are programmed by systems designers to operate manufacturing processes via user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. These variables can be user-defined and can be defined as bits, bytes, words, integers, floating point numbers, timers, counters and/or other data types to name but a few examples.

Various remote applications or systems often attempt to update and/or acquire PLC information or related device information *via* a plurality of different, competing and often incompatible or insecure network technologies. A major concern with this type of access to PLC's and control systems in general, relates to the amount of security that is provided when sending or receiving data to and from the PLC and/or associated equipment. In most factories or industrial environments, complex and sometimes dangerous operations are performed in a given manufacturing setting. Thus, if a network-connected controller were inadvertently accessed, or even worse, intentional sabotage were to occur by a rogue machine or individual, potentially harmful results can occur.

One attempt at providing security in industrial control systems relates to simple password protection to limit access to the systems. This can take the form of a plant or controls Engineer or Administrator entering an alpha-numeric string that is typed by an operator each time access is attempted, wherein the controller grants access based on a successful typing of the password. These type passwords are highly prone to attack or discovery, however. Often times, users employ passwords that are relatively easy to determine (*e*.*g*., person's name or birthday). Sometimes, users exchange passwords with other users, whereby the password is overheard or simply, a user with improper authorization comes in contact with the password. Even if a somewhat higher level of security is provided, parties employing sophisticated hacking techniques can often penetrate sensitive control systems, whereby access should be limited to authorized users and/or systems in order to mitigate potentially harmful consequences.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention relates to a system and methodology to facilitate network and/or automation device security in an industrial automation environment. Various systems and methodologies are provided to promote security across and/or within networks and in accordance with different device capabilities. In one aspect of the present invention, an automation security architecture is provided that employs various models to determine where security resources are to be deployed and/or executed while limiting access to network-based automation components in accordance with one or more model attributes. Such models can include asset models that describe the type of automation devices to be accessed and access models that determine permitted network access capabilities (*e*.*g*., read only, write only, read/write, memory locations permitted or denied). These models can include role information or attributes relating to the users who attempt access (*e*.*g*., Manager, Engineer, Maintenance), wherein access is limited based upon the role information contained therein. The models also can utilize other security attributes such as time information that limits access to a predetermined timeframe or period and/or employ location information that enables or denies network access depending on the source or location of an associated network request. Various security schemas can be provided to communicate respective model and/or attribute information, wherein the security schemas can be in coded in an XML format, for example, to send network requests, specify attributes, and transmit security responses that deny/permit access to a respective device and/or define boundaries or limitations for interacting with the device (*e*.*g*., specify time attribute that enables access to the device for specified time).

In another aspect of the present invention, a communications model is provided that determines where security resources are to be deployed and/or operated. The communications model includes an automation infrastructure model that describes lower-end factory devices and respective network/processing capabilities, whereas an IT infrastructure model describes higher-end network resources such as a network server, gateway, or switching device. Depending on the processing capabilities afforded by the automation infrastructure and the IT infrastructure, security processing can be located or placed within the respective infrastructures based upon infrastructure capabilities to ultimately control access to sensitive factory locations. In one example, if a lower-end control device has limited processing capabilities, then a network server or other security component can interact with outside network devices attempting access to the lower-end device. Such interaction can include security negotiations and/or security model/attribute processing that determine whether or not the outside network device should be permitted access to the lower-end factory device or network. If such access is permitted, then an access key or other mechanism having one or more security parameters, can be passed to the lower-end device in order to permit future access for the outside network device in accordance with the security parameters defined within the access key. As can be appreciated, if an automation resource has higher processing capabilities, some or all of the aforementioned security processing can be transferred from IT network resources to automation resources.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

Fig. 1 is a schematic block diagram illustrating an automation security architecture in accordance with an aspect of the present invention.
Fig. 2 is a diagram illustrating example asset and access based models in accordance with an aspect of the present invention.
Fig. 3 is a diagram illustrating an example security system in accordance with an aspect of the present invention.
Fig. 4 is a diagram illustrating an example network security model in accordance with an aspect of the present invention.
Fig. 5 is a diagram illustrating an automation security server in accordance with an aspect of the present invention.
Fig. 6 is a schematic block diagram illustrating security processing in accordance with an aspect of the present invention.
Fig. 7 is a schematic block diagram illustrating security access in accordance with an aspect of the present invention.
Fig. 8 is a diagram illustrating a security request schema in accordance with an aspect of the present invention.
Fig. 9 is a diagram illustrating a security response schema in accordance with an aspect of the present invention.
Fig. 10 is a flow diagram illustrating security infrastructure processing in accordance with an aspect of the present invention.
Fig. 11 is a flow diagram illustrating security attribute processing in accordance with an aspect of the present invention.

### DETAILED DESCRIPTION OF THE INVENTION

The present invention relates to a system and methodology facilitating automation security in a networked-based industrial controller environment. Various components, systems and methodologies are provided to facilitate varying levels of automation security depending on one or more security models, system capabilities, and/or other factors such as risk and cost-based assessments, for example. The security models can include asset and access based models having respective security attributes that describe the type of automation component to be accessed and the type of access permitted within the automation component such as a read and/or write access. Other type attributes include time and location information that further control outside network access to automation components.

It is noted that as used in this application, terms such as "component," "security component," "model," "schema, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith.

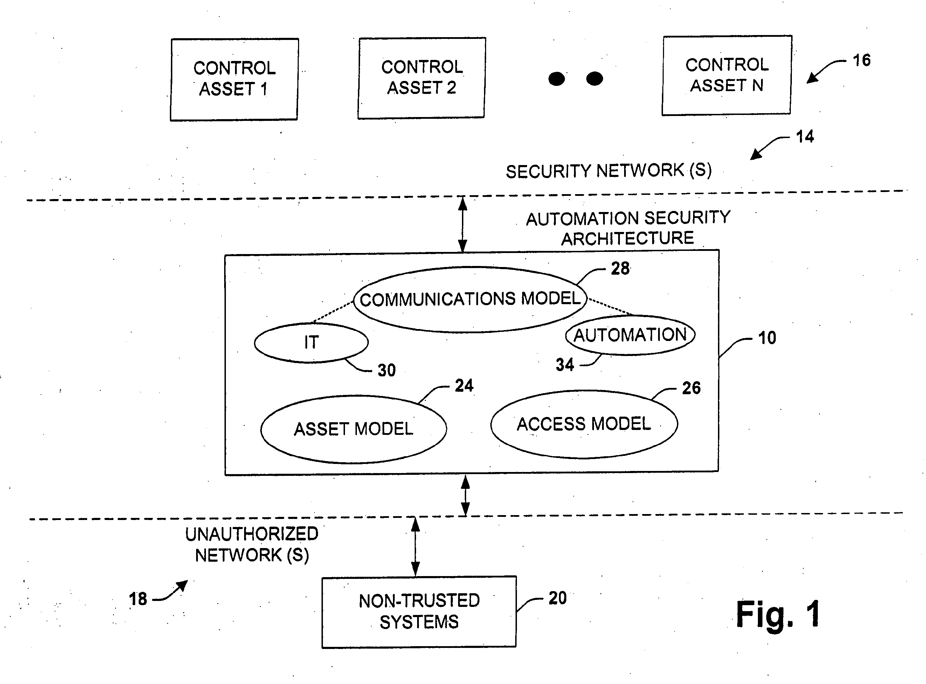

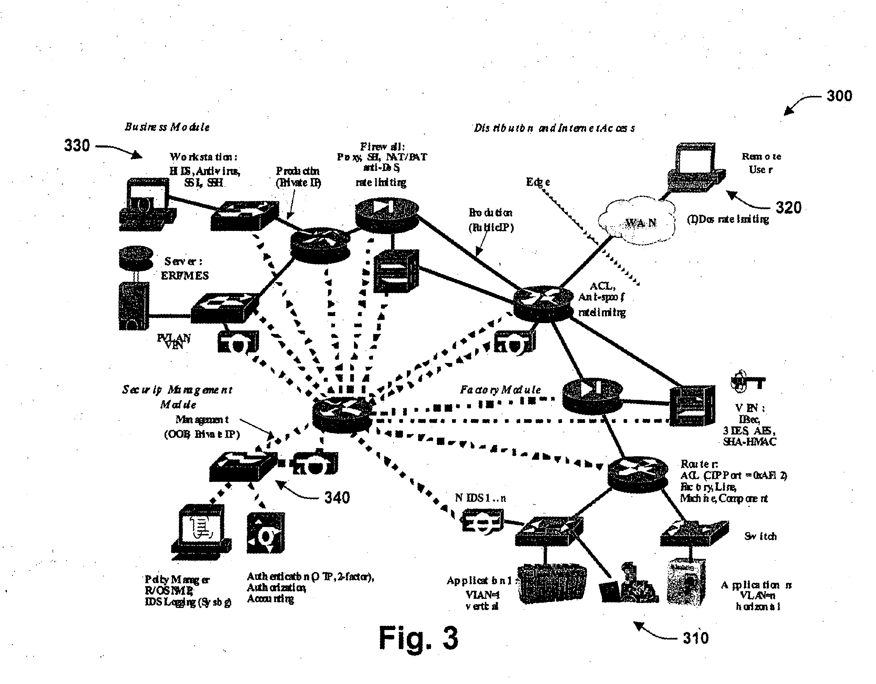

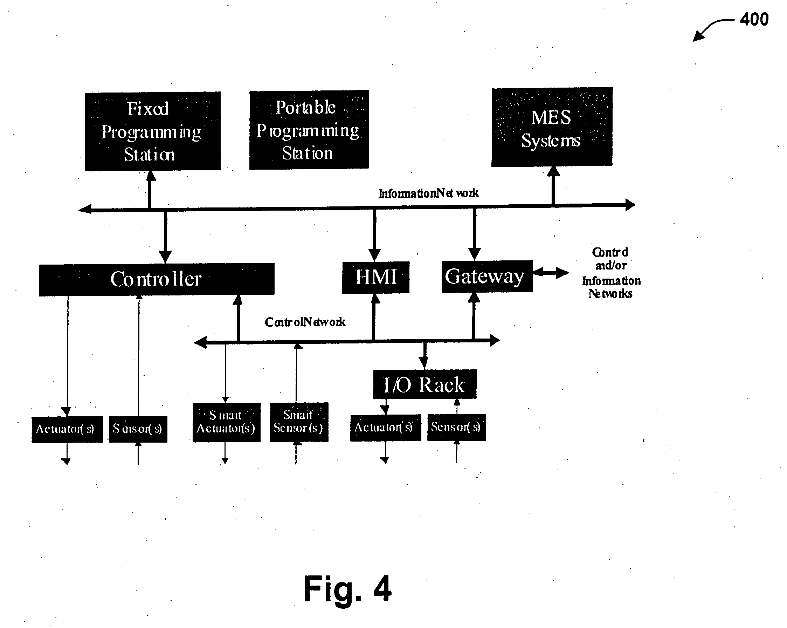

Referring initially to Fig. 1, a security architecture 10 is illustrated in accordance with an aspect of the present invention. The security architecture 10 operates as a security buffer between a security network 14 having one or more control assets 16 and an unauthorized network 18 composed of one or more non-trusted systems 20 attempting network access to the control assets. Depending on the nature of the control assets (*e*.*g*., real time versus non-real time, embedded controller, network computer) and the type of access attempted (e.g., role, time, location, read/write), the security architecture 10 deploys varying levels of security options, configurations, components, rules, policies, and the like to mitigate non-trusted system access and/or attack (includes deployment of security resources to the control assets and components associated with the control assets). In addition, the security architecture 10 can act as a facilitator of communications between the security network 14 and the unauthorized network 18. For example, the non-trusted systems 20 may negotiate with the security architecture 10 for access to the control assets 16. If access is permitted as described in more detail below, the non-trusted systems 20 may gain direct access to the control assets 16 after suitable authorization by the security architecture 10. The security architecture 10 can also include one or more security components as follows:
- An asset model 24 for describing the factory assets that are to be secured
- An access model 26 for describing the types of access to the assets in order to facilitate security for effective and efficient operations (*e*.*g*., attributes controlling read/write, time of access, location of remote access device)
- A communications model 28 describing or defining infrastructure to facilitate secure and flexible access to the assets, wherein the communication model can include other models such as an IT infrastructure model 30 and an automation infrastructure model 34 which are described in more detail below in Figs. 3 and 4.

The security architecture 10 can be based on existing and/or emerging security standards. Moreover, the security architecture can also be based on a formal threat and vulnerability analysis, wherein known security incidents are investigated, existing factory topology(s) mapped, and/or an attack tree analysis performed, wherein suitable security mechanisms such as hardware and/or software components are placed, adapted, and/or configured to mitigate further attacks. Some of the standards areas that can be utilized include:
- Security analysis
- Role, policy and/or rule based access
- IT security
- Automation and process control security (*i*.*e*., process control security requirements)
- Cryptography & Authentication/ Authorization/Accounting (AAA).

The Asset Model 24 describes factory components and groupings. Basic components are sensors, actuators, controllers, I/O modules, communications modules, human-machine interface (HMI) devices, and the like. Various security groupings are possible, whereby the factory components can be grouped into machines, machines can be grouped into lines, lines grouped into facilities and so forth. Respective groupings may have associated severity attributes such as risk and/or security incident cost. In one example, an ISA S95 Model for Enterprise to Control System Integration and other similar standards can be employed to integrate security aspects across and/or within respective groupings.

The Access Model 26 assigns roles (and/or other attributes) to different individuals and machines seeking to access the assets. Depending on determined attributes of the network request, access may be permitted, denied, modified, and/or negotiated. Attributes can include the role (electrician, engineer, supplier, etc.) the source location of the access, the time of access, and other attributes, for example. As will be described in more detail below, the components and attributes of the various models 24 through 34 can be employed to authorize, limit, mitigate, and/or deny access to the non-trusted systems 20.

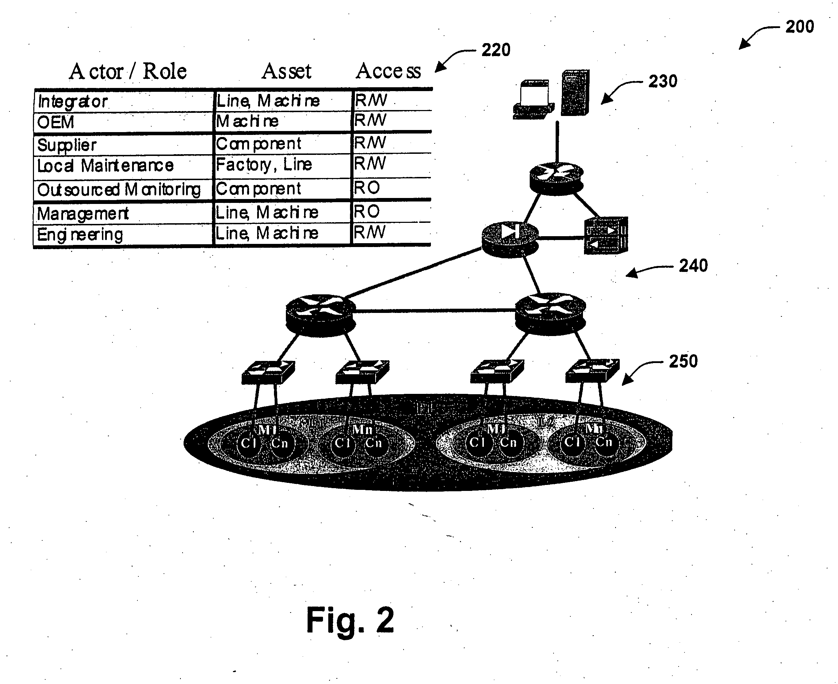

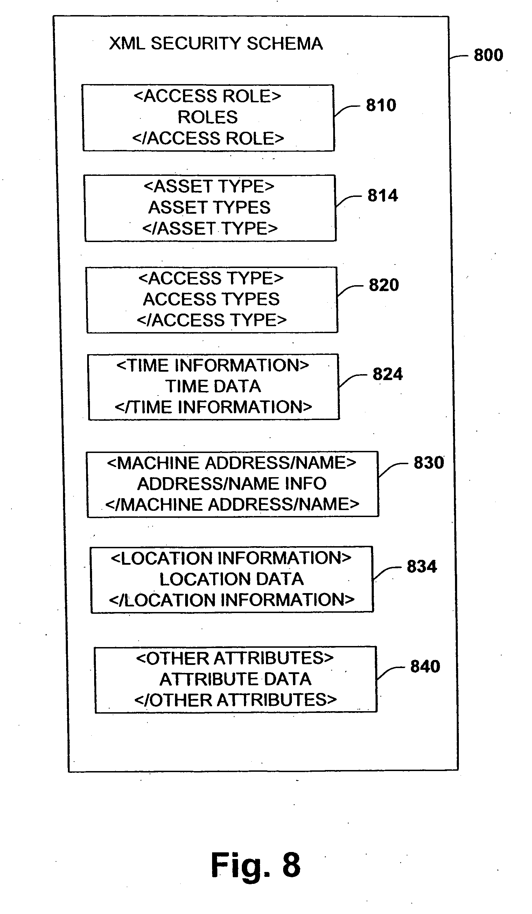

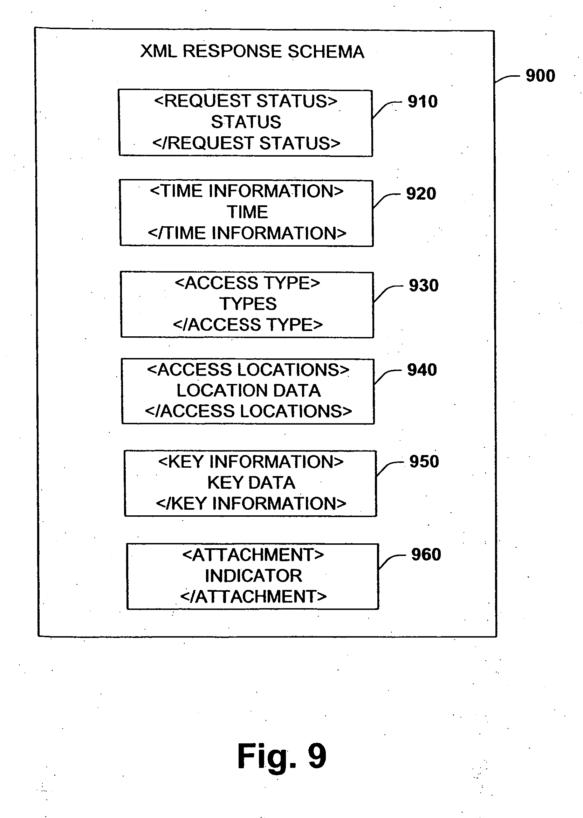

Referring now to Fig. 2, an exemplary asset/access based system 200 and schema 220 are illustrated in accordance with an aspect of the present invention, wherein the schema 220 associates respective assets with associated access attributes that can also include location and/or time based attributes as noted above. The schema 220 can be an XML schema in one example, wherein the schema is freely delivered, modified, and/or deployed to various control assets and/or components associated therewith to mitigate or control network access based upon the configuration of the attributes therein. The schema 220 will be described in more detail below with respect to Figs. 8 and 9. The system 200 illustrates some possible example components of the infrastructure described above. For example, an outside network computer or server 230 is illustrated communicating through various nodes 240 to lower-end factory devices at 250, wherein the schema 220, attributes and other security components described below control the amount and type of access permitted there between.

Fig. 3 illustrates an exemplary IT infrastructure model 300 that can be employed as part of the communications model described above. Fig. 3 is an example IT architecture depicting factory assets in the lower right of the figure at reference numeral 310. Access is typically requested from the shop floor, from the Internet depicted at reference numeral 320, and from business systems illustrated at 330, wherein a module on the lower left is a security management module 340 which is described in more detail below. Dashed lines indicate configuration, monitoring, and/or other services provided to support the IT infrastructure.

The IT Infrastructure Model 300 draws from a set of generic IT components and specifies parameters to assemble and configure the IT components to achieve flexible access to factory assets. As an example, IT components include switches with virtual local area network (VLAN) capability, routers with access list capability, firewalls, virtual private network (VPN) termination devices, intrusion detection systems, AAA servers, configuration tools, monitoring tools and so forth. It is noted that wireless components are generally given special consideration. For example, mobile interfaces are emerging as an important labor-saving component in factories. Wireless signals can cross physical boundaries, and thus, security protocols for wireless communications may differ from traditional network and/or wired communications. Furthermore, the IT Infrastructure Model 300 supports the Access Model and the Asset Model described above through access control lists, network-based intrusion detection system signatures, physical structure, schemas, other hardware and/or software components.

Fig. 4 illustrates an example Automation Infrastructure model 400 depicting access to non-IT type devices (*e*.*g*., having limited bandwidth or processing capabilities, real time considerations), wherein connection to IT networks may be achieved *via* a proxy, gateway, other intermediary device and/or direct connection, wherein various components or devices can be adapted with one or more security options as described herein.

Non-IT component types can have configured or adapted security capabilities based on such factors as whether it has user interfaces, how it communicates, and whether it is mobile or stationary, for example. Security parameters and policies can be developed for physical and/or electronic security for various component types (*e*.*g*., controller, HMI, sensor, and so forth). These include security protection levels, identification entry capability, and communication components utilizing integrity and/or privacy algorithms, for example.

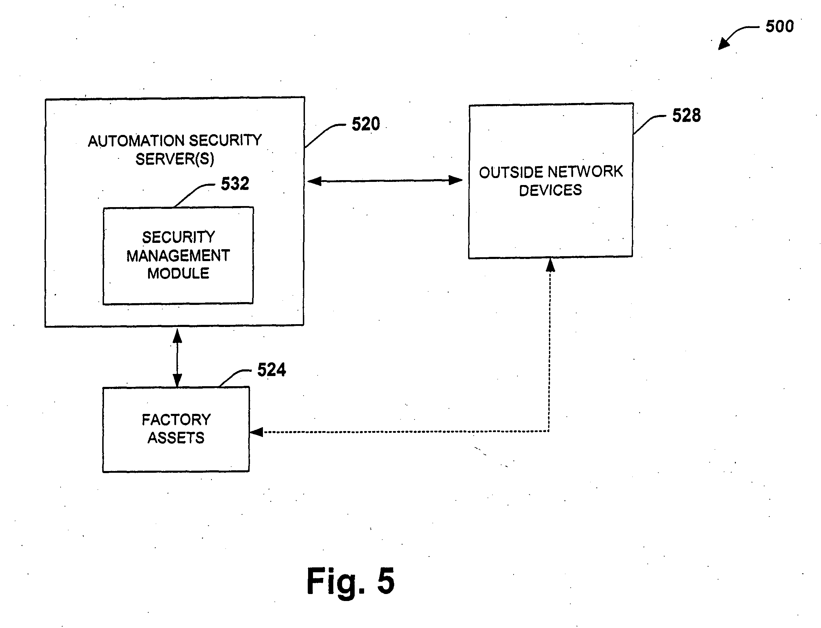

Fig. 5 illustrates an automation security system 500 in accordance with an aspect of the present invention. An automation security server 520 is provided (can also be provided as a cluster of distributed servers and/or clients), wherein the server provides a security layer between factory assets 524 (and/or to provide security access thereto) and outside network devices 528. The automation security server 520 (also referred to as the server) includes a security management module 532 for enforcing an enterprise wide policy and for managing security threats as they arise. A management interface (not shown) enables platform-independent user access to the security management module 532 and server 520. An underlying security server may also communicate with various security components and report an overall security status. Other management functions include the ability to schedule audits (validation), establish a security policy (access control lists), apply the policy from a single or distributed console, and generate reports that identify potential weakness/lapses in security.

The automation security server 520 can provide a centralized AAA security support system for factory automation devices and support a plurality of devices (and passwords) for a single application or distributed application. The security management module 532 provides a single point to add, delete and/or modify security rights of an individual, a group, or a device and distribute security information to various controllers and control devices on the plant floor.

In another aspect, the security server 520 can off-load security storage and processing from factory automation devices or assets 524. Respective networked automation devices may enforce security at their own interfaces, including primitive devices such as networked pushbuttons and indicator lamps. Generally, primitive security features can be expected in such resource-constrained devices. Thus, the security server 520 extends the functionality of these lower-level devices. For example:
- The low level device performs a two-way authentication with the security server to establish a secure link;
- Requestor identification information is forwarded over this link to authenticate and authorize access to the device;
- If access is allowed, a secure session is established with the requestor;
- Certain changes to the device are reported to and acted on by the server for auditing purposes. Typically, most of the security information is then stored at the server.

The security server 520 also supports the IT infrastructure described above. This includes the deployment of access control lists on an as-needed basis to IT infrastructure devices for enforcement of attribute-based access - based on identity, role, location, time, and so forth. This also includes deployment of factory automation intrusion detection signatures. In a related security aspect, compressed data (e.g., security keys, access codes) installed on devices can facilitate local access on the device in case the security server 520 is down or out of service, for example.

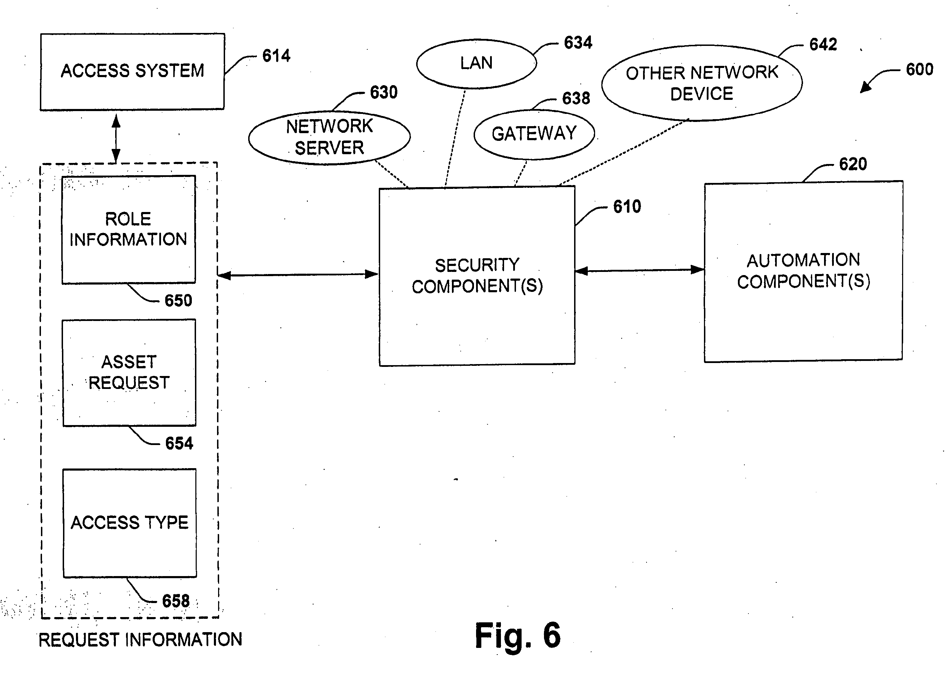

Referring to Fig. 6, a security processing system 600 is illustrated in accordance with an aspect of the present invention. The system 600 includes a security component 610 such as authentication software, virus detection, intrusion detection, authorization software, attack detection, protocol checker, encryption software, and so forth that acts as an intermediary between an access system 614 (*e*.*g*., remote network computer) and one or more automation components 620. In this aspect of the present invention, communications are directed through the security component 610 to the automation components 620. It is to be appreciated however, that the security component 610 may be employed as an initial and/or continuing security checker and then authorize communications directly between the access system 614 and the automation components 620. In another aspect, the security component 610, although authorizing direct communications may continue to monitor communications between the access system 614 and the automation components 620, wherein if a security issue arises or is detected, communications can be altered and or discontinued between the respective systems and components. As illustrated, the security component 610 can be associated with and/or incorporated within a network server 630, a local area network device 634, a gateway 638 and/or other network device or component 642 (*e*.*g*., rack communications module, PLC, network switch, VPN device, router, communications software, and so forth).

When attempting access to the automation components 620, the access system may provide role information 650, an asset request 654 and/or an access type 658 to the security component 610 in order to gain access to the automation components 620. For example, the access system 614 may specify role information 650 as a plant Engineer, request access to a controller, and request to have both read and write privileges to the controller. As can be appreciated, a plurality of other authorization and/or authentication information can be exchanged between the access system 614 and the security component 610. Upon receiving the request, the security component 610 performs security processing (*e*.*g*., verify security credentials, role, and request type) to determine if the requested access with the controller is to be allowed. If the access system 614 checks out as having suitable security, then the security component 610 grants access to the automation components 620, wherein the controller in this example can have data read from and/or written to. As will be described in more detail below; other type information can be exchanged between the security component 610 and the access system 614 such as time and location information, for example, that control if and/or how long network access may be granted to the automation components 620.

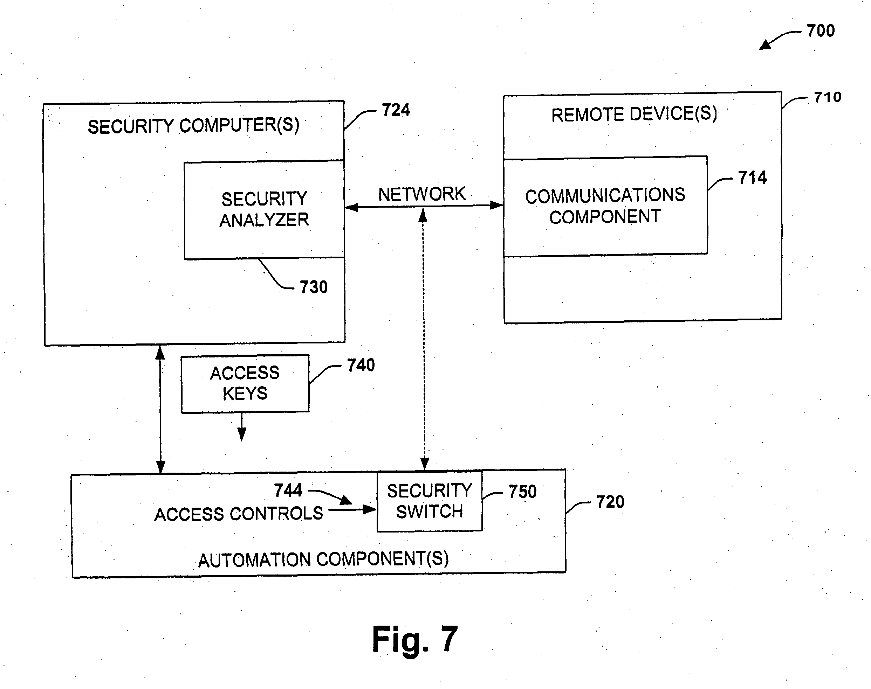

Turning to Fig. 7, a security access system 700 is illustrated in accordance with an aspect of the present invention. A remote device 710 having an associated communications component 714 desires to achieve network access to an automation component 720 *via* a network request. Before gaining access thereto, a security computer 724 having an associated security analyzer 730, analyzes the request to determine if the remote device 710 should be granted access to the automation component 720. For example, the security analyzer 730 may attempt to authenticate and/or authorize the remote device 710 *via* one or more security protocols (*e*.*g*., Internet Protocol Security (IPSec), Kerberos, Diffie-Hellman exchange, Internet Key Exchange (IKE), digital certificate, pre-shared key, encrypted password, and so forth). In addition, the security analyzer 730 can analyze respective user roles, asset requests, request types and so forth in order to determine if the remote device 710 should be granted access to the automation component 720.

If the security analyzer 730 determines a suitable security level for the remote device 710, then one or more access keys 740 can be transferred to the automation component 720 to control network access thereto. The access keys 740 may contain attribute information to enable one or more access controls 744 to operate an associated security switch 750. When enabled, the security switch 750 allows or controls communications between the automation component 720 and the remote device 720. In one example, the access keys 740 (*e*.*g*., digital codes describing how, who, when, where, and under what circumstances access is to be granted) may include time and/or location information to control access of the remote device 710. For example, the access keys 740 may stipulate that the remote device 700 is to be granted network access for 10 minutes, only from network requests originating from Chicago, from either business managers or maintenance personnel, data can only be read from the automation component, and have an associated authentication/authorization key or code to verify that the remote device is the machine that originally negotiated with the security analyzer 730. Given that time coded information can be contained within the access keys 740, the access controls 744 can be timed and/or checked after the time specified in the access keys has expired, wherein the security switch 750 is then disabled to outside network communications from the remote device 720.

It is to be appreciated that a plurality of security and/or attribute information can be contained within the access keys 740 to subsequently control the security switch 750. For example batch, process, program, calendar, GPS (Global Positioning Information) to specify local and/or wireless network locations, memory restrictions (e.g., can access I/O memory but not program memory), and other information or security attributes may be included as part of the access keys 740 to control access to the automation component 720. In one example, the access keys 740 may specify that during real time batch processing, no access may be granted to the automation component 720, otherwise, during other program or automated operations, no such network restriction is required. As noted above, the security computer 724 and/or analyzer 730 can continue to monitor network traffic. If a security problem is detected, the security computer 740 can issue new access keys 740 (or alter previous keys) that revoke and/or limit the network access of the remote device 720.

Figs. 8 and 9 illustrate exemplary schemas that may be employed for security communications in accordance with the present invention. Although the schemas represent one possible manner in which to transfer data to and from a network component and associated devices, it is to be appreciated that other possible data transfer mechanisms may be employed. For example, data can be transmitted in the form of binary or other type data packets that convey information in accordance with the present invention.

Referring now to Fig. 8, a diagram 800 illustrates a security schema in accordance with an aspect of the present invention. The security schema 800 includes one or more XML elements 810 through 840 (defined by starting and ending tags with (< /> symbols), arranged in substantially any order) that relate to one or more security items and provide information to facilitate remote network interactions with security and/or automation components. Although not shown, the XML elements and associated tags can also include attribute information if desired, wherein an attribute is a name-value pair associated with an element start tag (*e.g.*, <asset type = "PLC">). The security schema 800 can then be deployed to various systems and/or components to control access based upon the security contents specified therein. Thus, a requesting device matching the attributes of the security schema 800 can be granted access to a respective network or automation device. It is to be appreciated that the security schema 800 can be generated based upon a specific circumstance and/or contain information relating to a plurality of circumstances. For example, one example schema 800 may specify conditions for a plurality of different roles, machines, and/or other security attributes to achieve access to a network device, whereas another security schema 800 may only specify limited conditions for a single remote device having a predefined role, asset/access type, and the like.

At 810, an access role element is provided. This can include a plurality of roles such as integrator, OEM, supplier, local maintenance, outsourced manufacturing, Engineering, user name, and so forth. At 814, asset type element can be provided that indicates one or more asset types (e.g., sensor, I/O module, communications module, line, machine, component, factory, PLC, I/O device, computer, and the like). At 820, an access type element is provided. This can include various access types such as read/write, read, write, status access, program update, program read, I/O manipulation, memory locations, data table access and so forth. At 824, time information can also be provided that relates to how long network access may be achieved or continued. If desired, this element can be left without a specification and be considered to include indefinite access or access that is to be terminated after a substantial length of time. At 830, machine address and/or name information can be provided to indicate a physical and/or network location for the respective requesting device. This can also include verifying information to facilitate authorizing and/or authenticating a respective remote device. Proceeding to 834, location information can be specified. This type of information can include regional, local, network information and substantially any type of identifier that indicates the source of a network request. As noted above, network access can be granted or denied based upon the location of the request. At 840, other security attributes can be specified. As previously noted, such information can contain conditions that grant or deny access to a device such as during a calendar period, during a specified process, routine, and/or other conditions and events that may relate to specified operations of a network or automation device.

Referring to Fig. 9, a response schema 900 is illustrated in accordance with an aspect of the present invention. The response schema 900 can be delivered to an outside network device from a respective security component, analyzer, and/or computer, indicating one or more conditions for gaining access to a requested device. At 910, a request status element is provided. This status can include information such as request granted or request denied, continuing to process security information, request in process expected to be determined in specified amount of time. At 920, time information can be provided. This information can indicate how long network access has been granted. At 930, an access type element can be provided that specifies the type of access that has been granted (e.g., read only, read/write). At 940, access location can be provided. For example, an outside network device may have requested access to a plurality of automation devices having differing network locations. The access location element 940 can specify one or more respective network locations for access to the respective devices. At 950, key information can be specified. For example, this can include information relating to data that is required to access or unlock an automation device (*e*.*g*., digital pass code to enable remote device to gain entry to an automation device, wherein remote device has been authorized by another third party computer). At 960, an element specifies whether the proposed key information specified at 950 is included in the XML schema 900 or is included as an attachment to the schema. For example, encrypted data may be transmitted in binary or other digital format. Thus, the element 950 can indicate that one or more attached binaries follow the XML response schema 900. It is noted that the schema 900 can support having actual key information stored therein and support having one or more attachments (*e*.*g*., non-XML data transmitted subsequently to the response schema), if necessary.

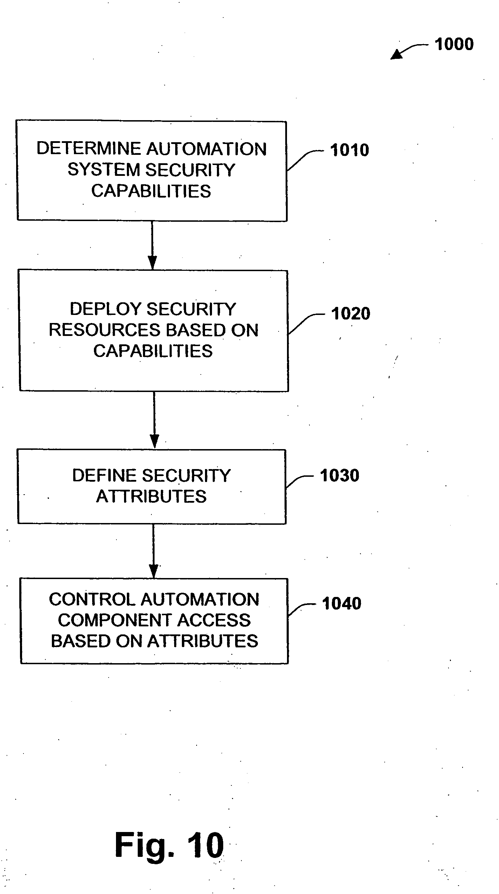

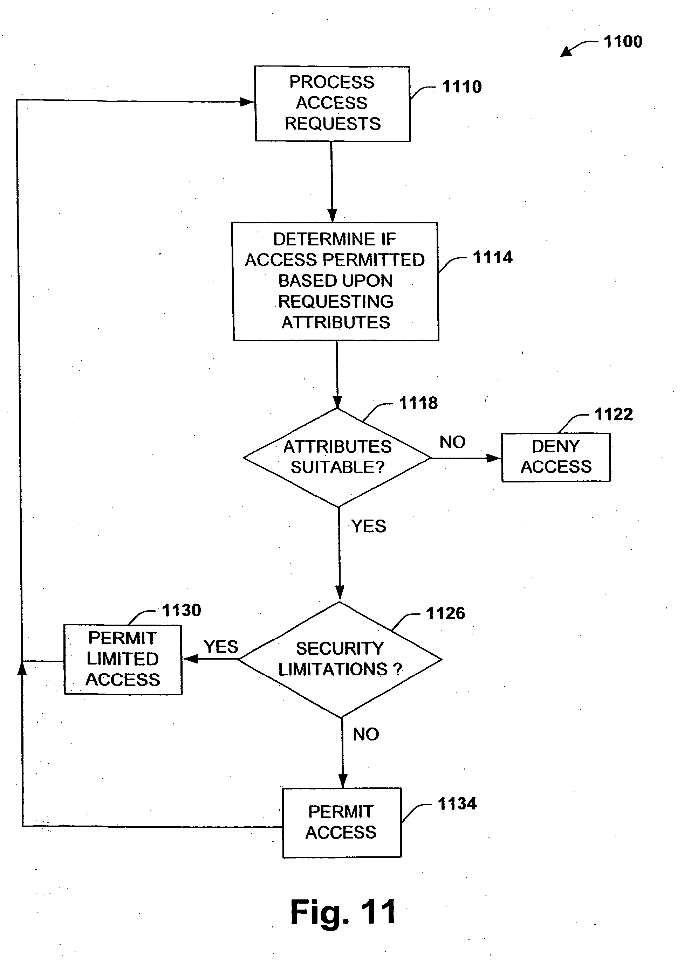

Figs. 10 and 11 illustrate security methodologies in accordance with an aspect the present invention. While, for purposes of simplicity of explanation, the methodologies are shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Fig. 10 is a diagram 1000 illustrating security infrastructure processing in accordance with an aspect of the present invention. Proceeding to 1010, automation system capabilities are determined. As noted above, this can include analyzing various infrastructure capabilities such as an IT infrastructure and an automation infrastructure to determine security processing capabilities (e.g., Is there enough CPU bandwidth to handle complex security negotiations and not affect real time automation operations). At 1020, security resources are deployed to one or more network and/or automation devices based upon the capabilities determined at 1010. For example, this can include employment of a security server for front-end network interactions with outside devices before allowing access to lower-end processing devices. At 1030, one or more security attributes or parameters are defined. Such attributes can include role information, time information, location information, asset information, access information, and/or other information that defines how, when, where, who, what, and under what circumstances a device or system may interact with a valued asset. At 1040, automation component (or network) access is controlled based upon the attributes defined at 1030. This can include analyzing a network request having an associated attribute group, class, set, and/or subset to determine if attributes of the request are suitable for gaining access to an asset (*e*.*g*., comparing attributes of a network request/negotiation with attributes of a control list, schema, and/or access key, then allowing access based upon suitable comparison or analysis of requesting attributes).

Fig. 11 is a flow diagram illustrating security attribute processing in accordance with an aspect of the present invention. Proceeding to 1110, network access requests are processed. At 1114, a determination is made as to whether attributes associated with the network request are suitable for gaining access to a security network or device. For example, if a time-coded attribute limited entry to a device to a time between 10:00 and 10:15, and the network request arrived at 10:16, then the respective attributes would not be suitable for gaining access to the device or network. At 1118, a determination is made as to whether the received attributes are suitable. If not, network or device access is denied at 1122. If the attributes are suitable at 1118, then the process proceeds to 1126. At 1126, security limitations are determined. For example, a time-coded attribute limiting device access for 10 minutes would be a limitation on the amount of time the requesting device may access the network or automation device. If a limitation does exist, the process proceeds to 1130, wherein access is permitted in accordance with the determined limitations. If there are no security limitations determined at 1126, then the process proceeds to 1134, wherein access is permitted without substantial limitation to the network or device (*e*.*g*., can be an overall timeout or other global limitation to limit all accesses to a certain amount of time or other type interaction/restriction). After access has been attained at 1130 or 1134, the process proceeds back to 1110 to process further requests.

What has been described above are preferred aspects of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the spirit and scope of the appended claims.

## Claims

1. An automation security system, comprising:
an asset component to define one or more factory assets;
an access component to define one or more security attributes associated with the factory assets; and
a security component to regulate access to the factory assets based upon the one or more security attributes.

2. The system of claim 1, the one or more or more security attributes including at least one of a role attribute, a time attribute, a location attribute, and an access type attribute.

3. The system of claim 1, the security component is based on at least one of a formal threat analysis, a vulnerability analysis, a factory topology mapping and an attack tree analysis.

4. The system of claim 3, the security component is based on at least one of automation and process control security, cryptography, and Authentication/Authorization/Accounting (AAA).

5. The system of claim 1, the asset component describes at least one of factory components and groupings, the factory components are at least one of sensors, actuators, controllers, I/O modules, communications modules, and human-machine interface (HMI) devices.

6. The system of claim 5, the groupings include factory components that are grouped into at least one of machines, machines grouped into lines, and lines grouped into facilities.

7. The system of claim 5, the groupings have associated severity attributes such as at least one of risk and security incident cost.

8. The system of claim 7, further comprising an ISA S95 Model for Enterprise to Control System Integration to integrate security aspects across or within respective groupings.

9. The system of claim 1, further comprising a set of generic IT components and specifies parameters to assemble and configure the IT components to achieve flexible access to the one or more factory assets.

10. The system of claim 9, the IT components include at least one of switches with virtual local area network (VLAN) capability, routers with access list capability, firewalls, virtual private network (VPN) termination devices, intrusion detection systems, AAA servers, configuration tools, and monitoring tools.

11. The system of claim 1, further comprising security parameters and policies that are developed for physical and electronic security for various component types.

12. The system of claim 11, the security parameters and policies further comprising at least one of security protection levels, identification entry capabilities, integrity algorithms, and privacy algorithms.

13. The system of claim 1, the security component includes at least one of authentication software, virus detection, intrusion detection, authorization software, attack detection, protocol checker, and encryption software.

14. The system of claim 13, the security component at least one of acts as an intermediary between an access system and one or more automation components, and facilitates communications between the access system and the one or more automation components.

15. The system of claim 2, the security attributes are specified as part of a network request to gain access to the one or more factory assets, the security attributes included in at least one of a group, set, subset, and class.

16. The system of claim 15, the security component employs at least one authentication procedure and an authorization procedure to process the network request.

17. The system of claim 16, further comprising one or more security protocols including at least one of Internet Protocol Security (IPSec), Kerberos, Diffie-Hellman exchange, Internet Key Exchange (IKE), digital certificate, pre-shared key, and encrypted password, to process the network request.

18. The system of claim 15, further comprising at least one of an access key and a security switch to control network access to a device or network.

19. The system of claim 18, the access key further comprises at least one of time, location, batch, process, program, calendar, GPS (Global Positioning Information) to specify local and wireless network locations, to control access to the device or network.

20. An automation security system, comprising:
one or more servers that manage a network interface between networked factory assets and other devices or users attempting access to the networked factory assets; and
a security management module associated with the network interface for enforcing an enterprise wide policy and to manage security threats directed to the networked factory assets.

21. The system of claim 20, the security management module at least one of schedules audits, establishes a security policy, applies the policy from a single or distributed console, and generates reports that identify potential weaknesses in security.

22. The system of claim 20, the security management module provides an interface to at least one of add, delete and modify security rights of an individual, a group, or a device and distribute security information to various controllers and control devices.

23. The system of claim 20, further comprising at least one of:
an authentication with the one or more servers to establish a secure link;
a secure link to authenticate and authorize access to a requestor of the networked factory assets; and
establishment of a secure session with the requestor if access is authorized.

24. An automation security methodology, comprising:
analyzing one or more automation assets;
modeling the automation assets in accordance with network security considerations; and
developing a security framework for an automation system based in part on the modeling of the automation assets and a network access type.

25. The method of claim 24, further comprising analyzing one or more security attributes to determine whether access should be granted to the one or more automation assets.

26. The method of claim 25, the one or more security attributes further comprise at least one of a role, an asset type, a location, a time, and an access type.

27. The method of claim 24, further comprising at least one of:
determining whether to grant access to the one or more automation assets;
granting access from the one or more automation assets; and
granting access from a network device associated with the one or more automation assets.

28. An automated security system for an industrial control environment, comprising:
means for defining one or more security attributes associated with at least one network request;
means for processing the one or more security attributes; and
means for controlling access to at least one of a network device and an automation component based in part on the one or more security attributes.

29. A security schema for a factory automation system, comprising:
a first data field to describe factory assets;
a second data field to describe security parameters for the factory assets; and
a schema to associate the first and second data fields, the schema employed to limit access to the factory assets based upon the security parameters.

30. The system of claim 29, the schema including at least one of an access role, an asset type, an access type, time information, address information, and location information.

31. The system of claim 29, further comprising a response schema to provide status to a requesting network device.

32. The system of claim 31, the response schema including at least one of a status field, a time field, an access type field, an access location field, and a key field.

33. The system of claim 31, the response schema including an attachment field to indicate other security data follows the response schema.
